# EUROPÄISCHE PATENTSCHRIFT

(11) **EP 1 264 659 B1**
(45) Veröffentlichungstag und Bekanntmachung des Hinweises auf die Patenterteilung: **03.03.2004**
(21) Anmeldenummer: 02012535.7
(22) Anmeldetag: 05.06.2002
(51) Int. Cl.: B23Q 11/04, B25B 5/16, B25B 5/06

(54) **Spannvorrichtung mit Schwenkspanner und Spanneisen**
Clamping mechanism with swing clamp
Dispositif de serrage avec dispositif de serrage pivotant et bride de fixation

(30) Priorität: 05.06.2001 DE 10127214
(43) Veröffentlichungstag der Anmeldung: 11.12.2002
(73) Patentinhaber: A. Römheld GmbH & Co KG, 35321 Laubach (DE)
(72) Erfinder: Niesner, Jürgen, Dipl.-Ing., 35410 Hungen (DE)
(74) Vertreter: von Ahsen, Erwin-Detlef, Dipl.-Ing.

(56) Entgegenhaltungen:
- DE-A- 1 752 144
- DE-A- 4 430 457
- US-A- 3 572 216
- US-A- 4 508 327
- US-A- 5 437 440

## Beschreibung

Die Erfindung bezieht sich auf eine Spannvorrichtung zum Spannen von Werkstücken auf Maschinentischen und/oder Paletten mittels eines Schwenkspanners, in dem eine Kolbenstange, die mit einem Spanneisen bestückt ist, gleitend und drehbar in einem Zylinderraum eines Gehäuses des Schwenkspanners und in einer diesen Zylinderraum abschließenden Buchse geführt ist, wobei als spiralförmige Kulissenbahn ausgebildete Aussparungen, die mit Kugeln zusammenwirken, radial über einen vorgegebenen Winkelbereich und axial über eine vorgegebene Hubhöhe verlaufen, derart, daß die Kulissenbahn in ihrer Länge die Hubhöhe und mit ihrer Spirale den Schwenkwinkel der Kolbenstange bestimmt.

Eine solche Spannvorrichtung ist aus der US 4 508 327 A bekannt.

In der spanabhebenden Bearbeitung werden Spannvorrichtungen eingesetzt, die das zu bearbeitende Werkstück in seiner vorgegebenen Lage festsetzen. Die Spannvorrichtung der vorgegebenen Art besteht aus einem Schwenkspanner, an dem ein Spanneisen in Form eines Spannarmes befestigt ist. Die Anforderungen an solche Spannvorrichtungen sind durch die während der Bearbeitung auf das Werkstück einwirkenden Kräfte vorgegeben. Der Schwenkspanner führt zwei Bewegungen aus, einmal eine drehende Bewegung und gleichzeitig eine hebende und senkende Bewegung. So ist er in der Lage, sich von dem gespannten Werkstück zu lösen, dieses durch sein Ausschwenken frei zu geben und über ein neues Werkstück wieder einzuschwenken und dieses festzusetzen.

Die Einsatzmöglichkeiten für solche Spannvorrichtungen sind vielseitig, womit diese besonderen Bedingungen unterliegen. Sowohl der Schwenkwinkel als auch der Spannhub sind auf den Fall bezogen vorgegebene Größen. Der bekannte Schwenkspanner nach der US 4 508 327 A besteht aus einem Zylindergehäuse, in dem eine Kolbenstange geführt ist, an deren oberen Ende das Spanneisen montiert ist. Die Kolbenstange vollführt durch den Hubkolben eine lineare Bewegung, die mittels einer aus Aussparungen gebildeten Kulissenbahn, die mit Kugeln zusammenwirkt, in eine Rotationsbewegung umgewandelt wird. Dabei ist die Kolbenstange zum einen durch einen Zylinderraum im Gehäuse des Schwenkspanners und zum anderen durch eine die Zylinderbohrung verschließende Buchse geführt. Die Kulissenbahn ist einem gesonderten Schwenkrohr zugeordnet, welches im den Zylinderraum nach unten abschließenden Boden befestigt ist und in eine Sackbohrung an der Unterseite der Kolbenstange eingreift. Die in die Kulissenbahn eingreifenden Kugeln sind an der Innenseite dieser Sackbohrung angeordnet.

Nachteilig bei bekannten Schwenkspannern ist, daß für eine Anpassung des Schwenkwinkels immer auch das Schwenkrohr als gesondertes Bauteil mit ausgebaut werden muß. So muß bei einem aus der US 5 437 440 A bekannten Schwenkspanner sogar der den Zylinderraum nach unten abschließende Gehäuseboden mit ausgebaut werden, was sehr aufwendig ist. Bei dem aus der eingangs zitierten US 4 508 327 A bekannten Schwenkspanner ist dieses wesentlich eleganter dadurch gelöst, daß das Schwenkrohr in einer Bohrung im Gehäusebohrung sitzt und mittels einer federbelasteten Kugel in dieser Bohrung arretiert wird. So kann nach Lösen der Buchse, die Buchse zusammen mit der Kolbenstange und dem Schwenkrohr abgenommen und eine Kolbenstangen-Schwenkrohr-Kombination mit verändertem Schwenkwinkel eingebaut werden. Dieses hat aber immer noch den Nachteil, daß für den Schwenkspanner viele gesonderte Bauteile, nämlich das Schwenkrohr, die das Schwenkrohr im Gehäuseboden arretierende Kugel, die zugehörige Feder und eine die Bohrung für die Kugel und die Feder verschließende Schraube, benötig werden. Außerdem besteht die Gefahr, daß sich das Schwenkrohr in der Bohrung im Gehäuseboden verdreht, so daß der Schwenkspanner das Werkstück dann nicht zuverlässig spannt.

Zur Vermeidung dieser Nachteile ist die erfindungsgemäße Spannvorrichtung dadurch gekennzeichnet, daß die Kulissenbahn in der Kolbenstange eingelassen ist und die Kugeln in Bohrungen in der Buchse eingelegt sind. Auf diese Weise kann die Buchse zusammen mit der Kolbenstange ausgebaut und der Schwenkwinkel durch einsetzen einer neuen Paarung aus Kolbenstange und Buchse angepaßt werden.

Eine Weiterbildung der Erfindung befaßt sich mit Folgenden:

Die Art der Schwenk-Hub-Bewegung bestimmt u.a. die Bauweise hinsichtlich der Größe. Femer ist die Befestigung des Spanneisens auf der Kolbenstange maßgebend für die Übertragung der eingeleiteten Kräfte und ausschlaggebend für die Wechselmöglichkeit derselben. Die Spanneisen müssen den Anforderungen angepaßt sein und sind in ihrer Spannarmlänge durch den Einsatz bestimmt. Das erfordert, daß dem Schwenkspanner verschiedene Spanneisen zuzuordnen sind, so daß diese leicht auswechselbar sein müssen.

Die bekannten Ausführungen (DE 44 30 457 und RÖMHELD Prospekt B 1881 Ausgabe 11-00) gehen einmal von einer konischen Befestigung aus, die einen guten Sitz des Spanneisens infolge Reibschluß ermöglicht. Das Lösen eines solchen Spanneisens ist jedoch nur mit Spezialwerkzeugen möglich. Eine andere Ausführung sieht vor, das Spanneisen auf der Spannseite mit einem Schlitz zu versehen, der mittels einer Schraubverbindung zusammenziehbar ist und so das Spanneisen auf der Kolbenstange festsetzt. Der Schlitz auf der Spannseite stellt jedoch eine Schwächung des Querschnittes dar.

Dieser Weiterbildung liegt somit die Aufgabe zugrunde die Befestigung des Spanneisens so auf der Kolbenstange anzuordnen, daß es leicht auswechselbar ist und dennoch für jeden Bearbeitungsvorgang die notwendige Festigkeit besitzt.

Die Lösung dieser Aufgabe ist den kennzeichnenden Merkmalen der Unteransprüche 5 und 6 zu entnehmen.

Die Erfindung ist in den Zeichnungen beschrieben.

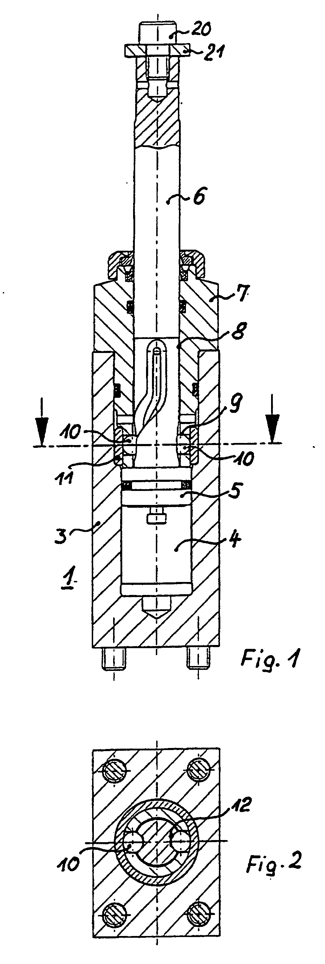

- Fig. 1: zeigt einen Schwenkspanner im Längsschnitt
- Fig. 2: zeigt einen Querschnitt durch diesen Schwenkspanner

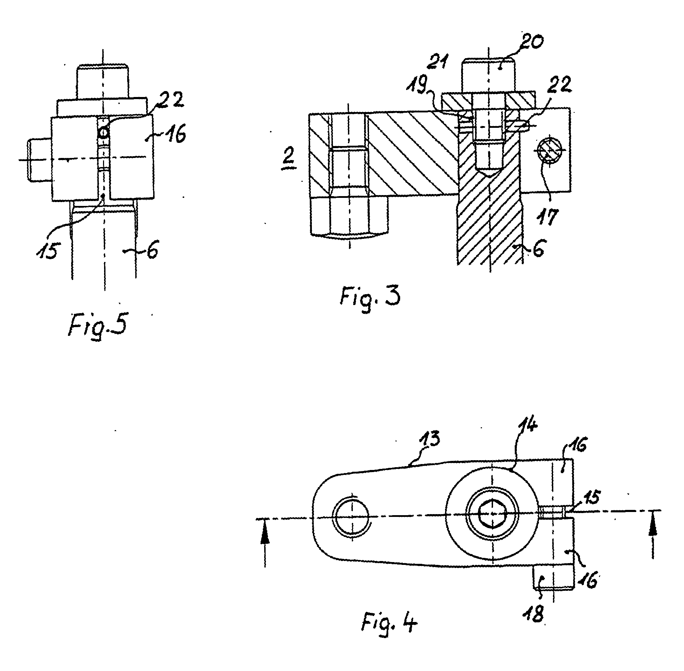

- Fig. 3: zeigt das aufgesetzte Spanneisen
- Fig. 4: zeigt die Draufsicht auf das Spanneisen
- Fig. 5: zeigt das Spanneisen mit Indexierung

Die Spannvorrichtung besteht aus dem Schwenkspanner 1 und einem Spanneisen 2. Der Schwenkspanner 1 besteht aus einem Gehäuse 3, das eine Sackbohrung in Form eines Zylinderraumes 4 aufweist. In diesem Zylinderraum 4 ist ein Kolben 5 mit seiner Kolbenstange 6 geführt. Der Zylinderraum 4 wird an seinem offenen Ende durch eine Buchse 7 abgeschlossen. Die Buchse 7 hat mittig eine Längsbohrung 8, deren Durchmesser dem Durchmesser der Kolbenstange 6 entspricht, so daß die Kolbenstange 6 in der Buchse 7 gleitend geführt ist. Die Kolbenstange 6 muß zum Spannen und Entspannen des Werkstückes geschwenkt werden, wobei die Schwenkbewegung in einem vorbestimmten Winkel zu erfolgen hat. Dieser Winkel ergibt sich aus den Einsatzbedingungen, die durch die Formgebung des zu bearbeitenden Werkstückes bestimmt sind. Mit der Schwenkbewegung wird gleichzeitig die Hubbewegung eingeleitet, durch die das Spanneisen 2 entweder auf das Werkstück aufgesetzt oder von diesem abgehoben wird. Dieser Bewegungsablauf erfolgt innerhalb des Zylinderraumes 4.

Die Buchse 7 weist in ihrem unteren Bereich zwei sich gegenüberliegende Bohrungen 9 auf. In diesen Bohrungen 9 ist je eine Kugel 10 eingeführt, wobei der Kugelradius so gewählt ist, daß die Kugel aus der Bohrung herausragt. Die Buchse 7 ist im Bereich der Bohrungen 9 leicht eingeschnürt, so daß ein Ring 11 auf die Buchse aufsetzbar ist, der die Bohrungen 9 nach außen abschließt. Die Kugeln 10 können somit nicht nach außen aus der Buchse heraus gedrückt werden, sie stützen sich an dem Ring 11 ab. Die Kolbenstange 6 ist in ihrem unteren Teil, und zwar im Bereich der Kugeln 10 mit zwei sich gegenüberliegenden Aussparungen 12 versehen. Diese Aussparungen 12 bestimmen in ihrer radialen Länge den Winkel, um den die Schwenkbewegung des Schwenkspanners vollzogen werden soll und in ihrer axialen Höhe den Hub, um den Die Kolbenstange heb- und senkbar sein soll. Damit ist jeder Schwenkwinkel in Verbindung mit jedem Hub an einer Kolbenstange eingebbar. Durch leichtes Auswechseln der Kolbenstangen lassen sich somit die Schwenkspanner jedem Einsatz anpassen.

Die Aussparungen 12 sind so tief in die Kolbenstange 6 eingelassen, daß die Kugeln 10 sowohl an der Wandung des Ringes 11 als auch an der ausgesparten Kolbenstange anliegen und damit einer gleitenden Bewegung folgen. Die Kolbenstange 6 mit ihren Aussparungen 12, die Buchse 7 mit ihren Bohrungen 9 und die verbindenden Kugeln 10 bilden somit eine Einheit. In dieser Einheit ist die Schwenkbewegung der Kolbenstange 6 nur im Bereich der radialen Länge der Aussparung 12 und der Hub nur im Bereich der axialen Höhe der Aussparung 12 möglich.

Eine solche Anordnung läßt eine Schwenk- und Hubbewegung nur im Bereich der Aussparung 12 zu. Soweit keine anderen Maßnahmen getroffen sind, muß die Schwenkbewegung im ausgefahrenen Zustand von Hand vollzogen werden. In einer weiteren Ausgestaltung der Erfindung wird mittels einer in die Kolbenstange 6 integrierten Kulissenbahn 23 anstelle der Aussparung 12 die Schwenk- und Hubbewegung in einem Arbeitsgang ausgeführt. Die Kulissenbahn 23 ist so in die Kolbenstange eingelassen, daß die Kugel 10 darin geführt ist. Hierbei ist die Kulissenbahn spiralförmig ausgebildet und so um die Kolbenstange 6 geführt, daß Anfang und Ende den Winkelbereich bestimmen, um den die Schwenkbewegung vollzogen werden soll. Die Länge der Kulissenbahn bestimmt hierbei den Hub der Kolbenstange.

Das Spanneisen 2 besteht aus einem Spannarm 13, der mit einer Bohrung 14 versehen ist, die dem Durchmesser des Kopfes der Kolbenstange 6 entspricht. Diese Bohrung 14 ist so weit wie möglich an das eine Ende des Spannarmes gelegt. Von dieser Bohrung ausgehend ist in den Spannarm an der dem Spannvorgang gegenüberliegenden Seite ein nach außen gerichteter Schlitz 15 eingebracht. Damit bildet der Spannarm zwei Schenkel 16, die durch den Schlitz 15 getrennt sind, Durch diese beiden Schenkel ist eine Bohrung 17 geführt, die zweckmäßig in einem der Schenkel mit einem Innengewinde versehen ist, so daß mittels einer Schraube 18 die beiden Schenkel 16 zusammenziehbar sind. Das Kopfende der Kolbenstange 6 wird zweckmäßig über den Bereich der Spannarmdicke leicht eingeschnürt, so daß das aufgesetzte Spanneisen lagebestimmt ist durch festziehen der Schraube 18 ist es dann auch drehsicher. Um zu verhindern, daß durch die Krafteinwirkung das Spanneisen sich von der Kolbenstange abzieht, wird in die Kolbenstange axial oben eine Gewindebohrung 19 eingebracht. Mittels einer Schraube 20 und einer Scheibe 21 ist das Spanneisen dann auch in dieser Richtung abgesichert.

Die Lage des Spanneisens auf der Kolbenstange ist immer dann von Bedeutung, wenn das Spanneisen gewechselt werden muß. Um sicher zu stellen, daß der Spannarm auch nach einem Wechsel die gleiche Position einnimmt wie zuvor, ist ein Indexstift 22 vorgesehen. Dieser Indexstift wird in einer Bohrung fixiert, die in Längsrichtung des Spannarmes in die Kolbenstange 6 eingelassen ist. Der in diese Bohrung eingeführte Indexstift ragt damit aus der Bohrung heraus und in den Schlitz 15 hinein, so daß das Spanneisen mit seinem Schlitz über den Indexstift in seiner Lage fixiert ist.

### Bezugszeichenliste:

- 1: Schwenkspanner
- 2: Spanneisen
- 3: Gehäuse
- 4: Zylinderraum
- 5: Kolben
- 6: Kolbenstange
- 7: Buchse
- 8: Längsbohrung
- 9: Bohrung für Kugeln
- 10: Kugel
- 11: Ring
- 12: Aussparung
- 13: Spannarm
- 14: Bohrung
- 15: Schlitz
- 16: Schenkel
- 17: Durchgangsbohrung mit Gewindeteil
- 18: Schraube
- 19: Innengewinde
- 20: Schraube
- 21: Scheibe
- 22: Indexstift
- 23: Kulisse

## Patentansprüche

1. Spannvorrichtung zum Spannen von Werkstücken auf Maschinentischen und/oder Paletten mittels eines Schwenkspanners (1), in dem eine Kolbenstange (6), die mit einem Spanneisen (2) bestückt ist, gleitend und drehbar in einem Zylinderraum (4) eines Gehäuses (3) des Schwenkspanners (1) und in einer diesen Zylinderraum (4) abschließenden Buchse (7) geführt ist, wobei als spiralförmige Kulissenbahn (23) ausgebildete Aussparungen (12), die mit Kugeln (10) zusammenwirken, radial über einen vorgegebenen Winkelbereich und axial über eine vorgegebene Hubhöhe verlaufen, derart, daß die Kulissenbahn (23) in ihrer Länge die Hubhöhe und mit ihrer Spirale den Schwenkwinkel der Kolbenstange (6) bestimmt, **dadurch gekennzeichnet, daß** die Kulissenbahn (23) in die Kolbenstange (6) eingelassen ist und die Kugeln (10) in Bohrungen (9) in der Buchse (7) eingelegt sind.

2. Spannvorrichtung nach Anspruch 1, **dadurch gekennzeichnet, daß** im unteren Bereich der Buchse (7) zwei gegenüberliegende Bohrungen (9) eingebracht sind.

3. Spannvorrichtung nach Anspruche 1 oder 2, **dadurch gekennzeichnet, daß** die Buchse (7) im Bereich ihrer Bohrungen (9) eingeschnürt ist und daß außen über die Bohrungen (9) ein Ring (11) über die Buchse gelegt ist, an dem sich die Kugeln (10) abstützen.

4. Spannvorrichtung nach einem der Ansprüche 1 bis 3, **dadurch gekennzeichnet, daß** die Kolbenstange (6) an ihrem Kopfende einen mit einer Bohrung (14) versehenen Spannarm (13) aufnimmt und daß dieser Spannarm auf einer am Kopfende der Kolbenstange vorgesehenen Verjüngung des Kolbenstangenquerschnitts aufsitzt und daß in die Kolbenstange eine Gewindebohrung eingelassen ist, so daß durch eine Schraube der Spannarm längs fixierbar ist und daß der Spannarm einen nach außen gerichteten Schlitz (15) aufweist der mittels einer Schraubverbindung so verspannbar ist, daß der Spannarm drehsicher befestigt ist.

5. Spannvorrichtung nach einem der Ansprüche 1 bis 4, **dadurch gekennzeichnet, daß** im Kopfende der Kolbenstange (6) eine Bohrung längs in Richtung des Spannarmes (13) eingebracht ist, in die ein Indexstift (22) einfügbar ist, der in den Schlitz (15) des Spannarmes ragt.

## Claims

1. Clamping device for clamping work-pieces on machine tables and/or pallets by means of a pivotable clamping means (1) in which a piston rod (6) equipped with a clamping head (2) is guided for sliding and rotating movement in a cylinder space (4) of a housing (3) of said pivotable clamping means (1) and in a sleeve (7) terminating this cylinder space (4), with recesses (12) configured as spiral-like sliding path (23), which cooperate with spheres (10), extending radially over a predetermined angular range and axially over a predetermined lifting stroke height, such that said sliding path (23) determines, by its length, the lifting stroke and, by its spiral, the pivoting angle of said piston rod (6), **characterised in that** said sliding path (23) is recessed in said piston rod (6) and that said spheres (10) are inserted into bores (9) in said sleeve (7).

2. Clamping device according to Claim 1, **characterised in that** two opposing bores (9) are machined in the lower region of said sleeve (7).

3. Clamping device according to Claim 1 or 2, **characterised in that** said sleeve (7) is necked in the region of its bores (9) and that a ring (11) is placed over said sleeve over said bores (9) on the outside, with said spheres (10) being supported on said ring.

4. Clamping device according to any of the Claims 1 to 3, **characterised in that** said piston rod (6) receives a clamping arm (13) on its head end, which is provided with a bore (14), and that this clamping arm is seated on a tapered portion of the cross-sectional area of said piston rod, which is formed on the head end of said piston rod, and that a threaded bore is machined into said piston rod in such a way that said clamping arm can be fixed by means of a screw and that said clamping arm presents an outwardly oriented slot (15), which can be tensioned by means of a threaded joint in such a manner that said clamping arm is fastened for preventing it from rotating.

5. Clamping device according to any of the Claims 1 to 4, **characterised in that** a bore is machined into the head end of said piston head (6) in the longitudinal direction towards said clamping arm (13), into which an indexing pin (22) can be inserted that projects into the slot (15) of said clamping arm.

## Revendications

1. Dispositif de serrage à fixer des pièces à usiner sur des tables de machines-outils et/ou des palettes moyennant un moyen de fixation pivotable (1), dans lequel une tige de bielle (6) munie d'une bride de serrage (2) est guidée pour un mouvement glissant ou rotatoire dans un espace de cylindre (4) d'un carter (3) dudit moyen de fixation pivotable (1) et dans un coussinet (7) qui ferme cet espace de cylindre (4), aux évidements (12) configurés sous forme d'une glissière (23) similaire à une spirale, qui coopère avec des sphères (10), s'étendant en sens radial sur une zone angulaire et en sens axial sur une course de levée prédéterminée, d'une telle manière, que ladite glissière (23) détermine, par sa longueur, la course de levée et, par sa spirale, l'angle de pivotement de ladite tige de bielle (6), **caractérisé en ce que** ladite glissière (23) est encastrée dans ladite tige de bielle (6), et **en ce que** lesdites sphères (10) sont insérées dans des alésages (9) dans ledit coussinet (7).

2. Dispositif de serrage selon la revendication 1, **caractérisé en ce que** deux alésages opposés (9) sont usinés dans la zone inférieure dudit coussinet (7).

3. Dispositif de serrage selon la revendication 1 ou 2, **caractérisé en ce que** ledit coussinet (7) est rétréci dans la zone de ses alésages (9), et **en ce qu'**un anneau (11) est placé sur lesdits alésages (9) sur ledit coussinet du côté extérieur, auxdites sphères (10) s'appuyant sur ladite bague.

4. Dispositif de serrage selon une quelconque des revendications 1 à 3, **caractérisé en ce que** ladite tige de bielle (6) reçoit un bras de serrage (13) à son extrémité de tête, qui est muni d'un alésage (14), et **en ce que** ledit bras de serrage se pose sur une partie en cône de l'aire de coupe transversale de ladite tige de bielle, qui est formée à l'extrémité de tête de ladite tige de bielle, et **en ce qu'**un alésage taraudé est usiné dans ladite tige de bielle d'une telle manière, que ledit bras de serrage puisse se fixer moyennant un écrou, et **en ce que** ledit bras de serrage présente une fente (15) orientée vers l'extérieur, qui peut être tendu moyennant un raccord à vis d'une telle façon, que ledit bras de serrage soit fixé de manière à empêcher une rotation.

5. Dispositif de serrage selon une quelconque des revendications 1 à 4, **caractérisé en ce qu'**un alésage est usiné dans l'extrémité de tête de ladite tige de bielle (6) en sens longitudinal vers ledit bras de serrage (13), dans lequel une aiguille d'indexage (22) peut être insérée, qui fait saillie dans ladite fente (15) dudit bras de serrage.
